# EUROPEAN PATENT APPLICATION

(11) **EP 2 615 056 A1**
(43) Date of publication of application: **17.07.2013**
(21) Application number: 11823105.9
(22) Date of filing: 05.07.2011
(51) Int. Cl.: B66F 9/07, B65G 1/04

(54) **TRANSELEVATOR FOR TRANSPORTING LOADS**

(30) Priority: 06.09.2010 ES 201031330 P
(71) Applicant: Mecalux S.A, 08940 Barcelona (ES)
(72) Inventor: FORÉS RÀFOLS, Albert, E-08940 Barcelona (ES)
(74) Representative: Isern-Jara, Nuria
(86) International application number: PCT/ES2011/070485
(87) International publication number: WO 2012/032200

(57) **Abstract**

Transelevator for transporting loads, comprising two vertical columns that can move in a horizontal plane, with a substantially rectangular cross section, an elevator moving vertically between said columns for moving a load from or to a storage compartment on a shelving unit, transmission means for operating the elevator, and drive means for moving the transelevator horizontally, in which the elevator transmission means and the drive means for lifting and translational movement are supported on one of the vertical columns, such that the main stresses due to the weight of the elevator and the inertia of the translational movement are supported by the main vertical column, the cross section of said main vertical column being greater than the section of the auxiliary vertical column.

## Description

### Object of the invention

This application for patent of invention has as object the registration of a transelevator for transporting loads, incorporating substantial innovations and advantages.

In other terms, the invention provides the development of a transelevator for transporting loads located, for example, on transport platforms, the transelevator being of the type comprising two parallel vertical columns along which an elevator may displace to support the load to be transported, one of the vertical columns supporting the weight and efforts on said elevator.

### Field of application of the invention

The field of application of the present invention is the industry aimed at the construction of equipments and structures for the transportation of goods within automatized storing facilities provided with multiple storage compartments placed on various floors.

### Background of the invention

The use of transelevators is well known in the technical field of automatized stores carrying out the function of storing the goods to a given height along the narrow passages between rows of shelving units, in a totally automatized form and without the assistance of an operator, the transelevator incorporating three movement axes: movement on X axis (corresponding to the movement along the corridor of the store between rows of shelving units), movement in the Y axis (corresponding to the movement from the bottom level to the upper storage compartments of the shelving units) and the removal in the Z axis (corresponding to the operation of introduction and removal of the goods transported to the storage compartments of the shelving units).

Two main types of transelevators are known, one of them, the so called "mono-column type" comprises a unique elevation column, being applicable in conditions in which the load to be transported is not very important as to the weight or dimensions, while the other type is the so called "double column type" which comprises two elevation columns and is particularly used when the dimensions and weight of the load are bigger, for which reason an elevator of bigger dimensions is required, this having the consequence of separating the centre of gravity from the elevation columns.

However, the double column transelevators have various drawbacks, such as the duplicity of the elevation elements associated to each of the columns, as for example, vertical guides, pulleys, cables and elevation drums.

Another disadvantageous aspect as a consequence of all the above stated, is the possibility of mismatch in the elevation between both vertical columns due to mismatch in the winding or advance of both cables associated to respective drums, all of this eventually affecting the stability and guiding capacity of the elevator during the raising or descent movements. It also implies substantial dimensions of the upper frame, determined by the need to support the weight of the elevator and the load by means of pulleys and fixed joints of the cables for the elevation, and also of the lower frame, which supports both vertical columns, due to the fact that the main loads which act on the same, transmitted to the points of connection of the columns, are displaced from the support points which are the translation wheels, all of which substantially increases the cost of manufacturing the transelevator.

Incidentally, the applicant does not known the existence of transelevators having the technical and construction features which are the object of the present invention.

### Description of the invention

The present invention has been developed with the aim to provide a transelevator for the transportation, removal and location of loads from and towards storage compartments of shelving units, additionally bringing other advantages which will be obvious from the description which follows.

Accordingly, it is an object of the present invention to provide a transelevator having two vertical columns capable of moving on an horizontal plane, the cross section of the columns being substantially rectangular, between which columns an elevator is capable of moving vertically, being aimed at the displacement of the load from or towards a storage compartment of a shelving unit, having transmission means for the driving of the elevator and driving means for the horizontal displacement of the transelevator, and being characterized by the fact that the transmission means of the elevator and the driving means for elevation and translation are supported on one of the vertical columns, so that the main efforts due to the weight of the elevator and to the inertia of the translation are supported by the main vertical column, being the cross section of said main vertical column larger than the cross section of the auxiliary vertical column.

Due to these features, the number of parts and auxiliary elements needed for guiding and driving the elevator is reduced (the duplicity of pulleys, elevation cables, drums, etc. is prevented), being additionally prevented the mismatch problems in the elevation between both sides of the elevator provided in the transelevator, due to the existence of eventual dimensional differences in the elements which take part in the elevation process, particularly the winding drums for the cable and the cables themselves.

According to another aspect of the invention, each of the columns is formed by a lower portion and upper portion which may be secured to each other by means of securing elements. In fact, the securing elements consist of fixing screws and similar elements to be located in holes made on a perimetric protruding section. In this way, the transelevator may be manufactured according to standard modules independently of the total height of the transelevator to be delivered, easing up at the same time the assembly on site.

Additionally, the transelevator has a crossbar connected in each of its ends to the corresponding lower portion of the vertical columns, which permits the transmission of efforts between both vertical columns, thus permitting said columns to absorb the majority of the efforts.

In an embodiment of the invention, the lower portions of both vertical columns and the additional crossbar form a unique structure.

Another object of the present invention consists in providing an elevator for the transportation of loads applicable to a transelevator of the double column type which has displacement capacity along said columns by means of guiding elements, and being characterised by the fact that it comprises two supporting sections substantially in "U" form secured together by its ends by means of crossbars, including the central part of each supporting section an horizontal plate secured in a fixed form thereto. Additionally, said horizontal plate has a plurality of orifices to locate the screws. In this way, the elevator may be assembled to any transelevator and extraction device, being capable of supporting any type of load.

The vertical column with larger dimensions in cross section will be called in the following "main column" while the column with a smaller cross section will be called "auxiliary column".

Preferably, the guiding means comprise a plurality of guiding wheels located on supports which are secured to the upper part of the crossbars, so that said guiding wheels are guided on the main vertical column in the X and Z directions and are guided in the auxiliary vertical column in the Z direction. Additionally, said wheels form groups of two wheels assembled to a plate articulated to a free rotating shaft.

It is to be remarked that in an advantageous form, the driving means for the elevation and translation of the transelevator will be arranged in the lower portion of the main vertical column.

Additionally, the elevation drum for winding the elevation cable protrudes sideways in respect to the main vertical column.

Other features and advantages of the transelevator which is the object of this invention, will be apparent from the description of a preferred, although not exclusive, embodiment, which is illustrated as a non limitating example in the appended drawings in which:

### Brief description of the drawings

Figure 1 is a general perspective view of a transelevator according to the present invention;

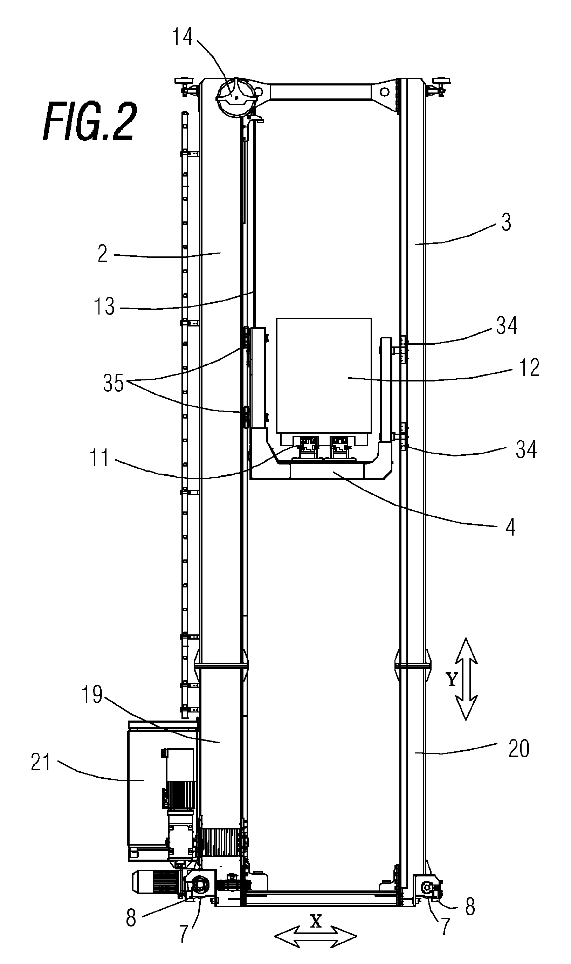

Figure 2 is a side view of the transelevator according to the invention;
Figure 3 is a perspective view of the lower driving unit located in the lower part of the transelevator;
Figure 4 is a perspective view of the lower driving unit located in the lower part of the transelevator;

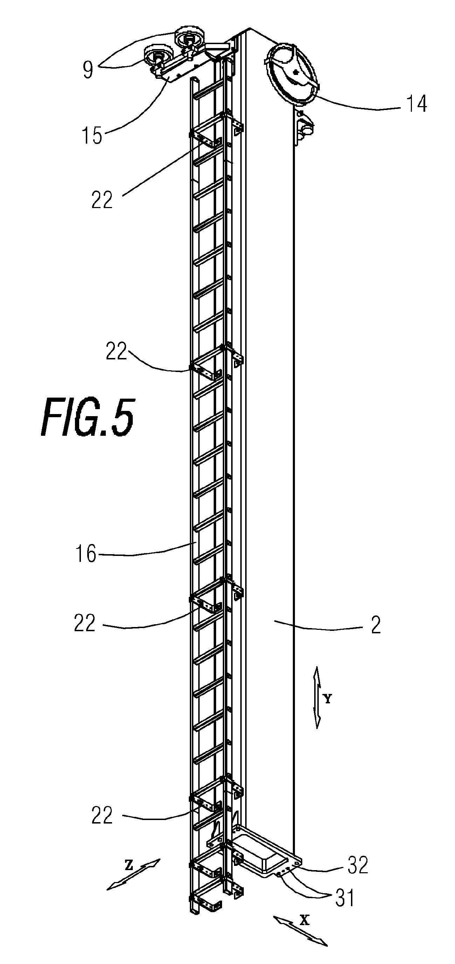

Figure 5 is a perspective view of the upper portion of the main column;

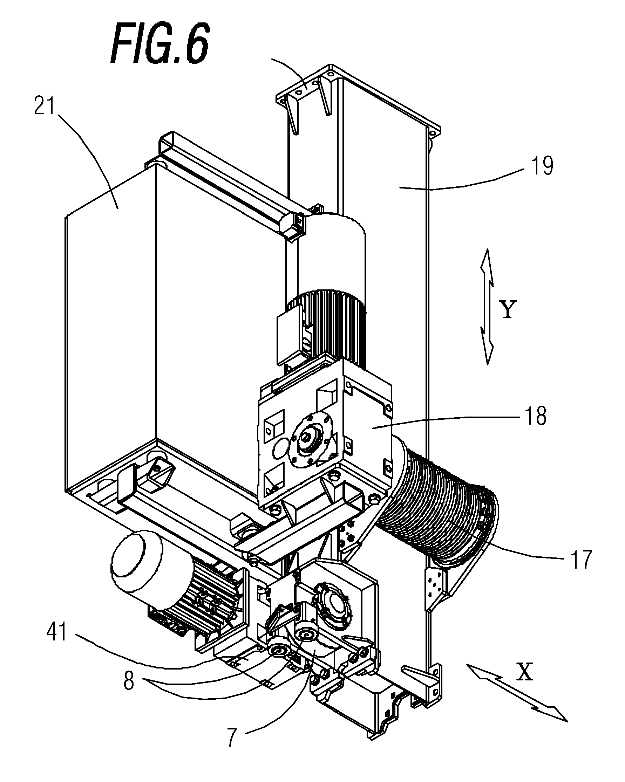

Figure 6 is a detailed perspective view of a portion of the lower driving unit;
Figure 7 is a perspective view of the structure of the elevator according to the invention, from the frontal part.
Figure 8 is a perspective view of the elevator with the extraction mechanism in place;
Figure 9 is a perspective view of the elevator from the other side, from which the guiding wheels for the elevation according to axis Z and X are to be seen;
Figure 10 is a perspective view of the guiding wheels of the elevator which are capable of moving along the main vertical column;
Figure 11 is a perspective view of the wheels for guiding the elevator which are capable of moving along the auxiliary vertical column;
Figure 12 is a detailed perspective view of the lower portion of the auxiliary vertical column in which the wheels for movement and guidance are arranged; and
Figure 13 is a perspective view of the transelevator located in a corridor of a conventional automatized store.
Figure 14 is a plant view of the two vertical columns together with the guiding wheels.

### Description of a preferred embodiment

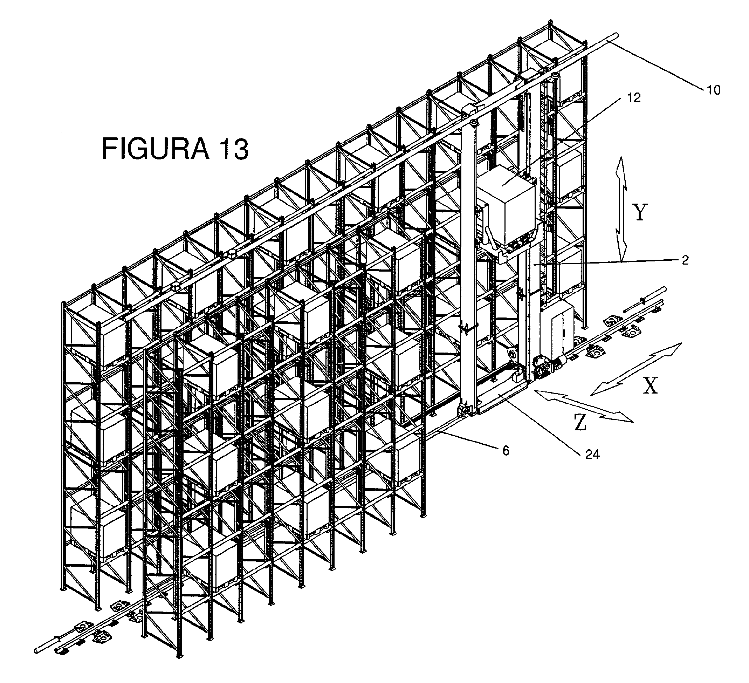

As shown in the appended drawings, a double column type transelevator according to the present invention permits the displacement of an elevator which is capable to displace a load from or towards any of the storage compartments or storage cells of the shelving units arranged in any of the two sides of the corridor which forms part of an automatized store, as shown in figure 13.

The transelevator which has been generally designated with reference numeral 1, comprises: two vertical metallic columns 2,3 capable to move on an horizontal plane, having a substantially rectangular cross-section, between which columns an elevator 4 is capable of moving vertically, being aimed at the displacement of a load 12 from or towards an storage compartment of a shelving unit; transmission means for driving the elevator and driving means for the horizontal displacement of the transelevator 1 which will be described below. Both the transmission means and the driving means for the elevation and translation are supported on the main vertical column 2 which has the largest cross-section.

Said driving means for the elevation and translation are advantageously arranged in the lower portion of the main vertical column 2.

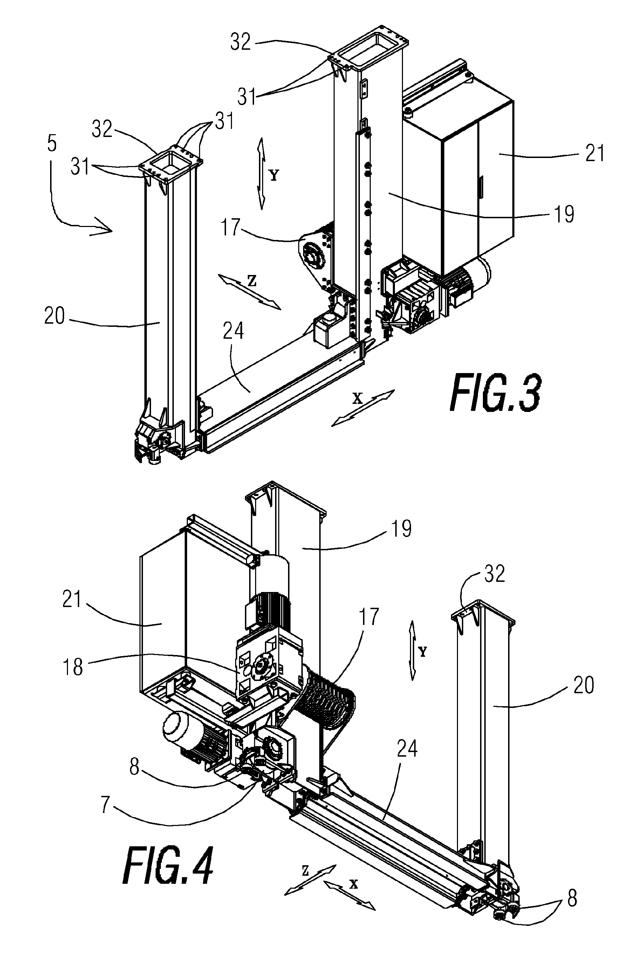

The lower portions of both vertical columns and the additional crossbar form a unitary structure 5 which will be designated "lower driving unit" which has the general form of a "U", as to be seen in figures 3 and 4.

Advantageously, said transelevator 1 is capable to operate on the three space axes (X, Y, Z, shown in figures by means of arrows). In this way, a translation movement of the whole transelevator may be carried out (X axis) along a corridor located between rows of shelving units, which transelevator moves along a guiding rail 6 by means of two groups of translation wheels 7, one of which is driven by the driving translation group 41. This translation movement is guided in the lower part by two pairs of lower guiding wheels 8, each pair being located close to one of the above cited translation wheels 7.

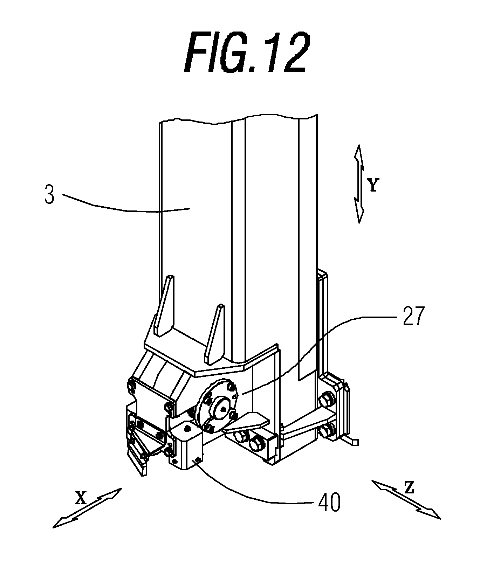

The lower ends of the vertical columns 2, 3 have an "L" shaped lodging to receive plates 27 to support the translation wheels 7, so that the translation wheels 7 are substantially aligned with the vertical axis of both columns 2, 3. To incorporate the lower guiding wheels 8, the supports 40 are secured on plates 27 so that the whole assembly is integrated with the columns 2, 3 as more clearly shown in figure 12. Thanks to the above explained configuration, the concept of translation headstock of the prior art, supporting the wheels and usually secured on lower frames in the transelevators disappears, reducing in this way the manufacturing costs and the length of the transelevator.

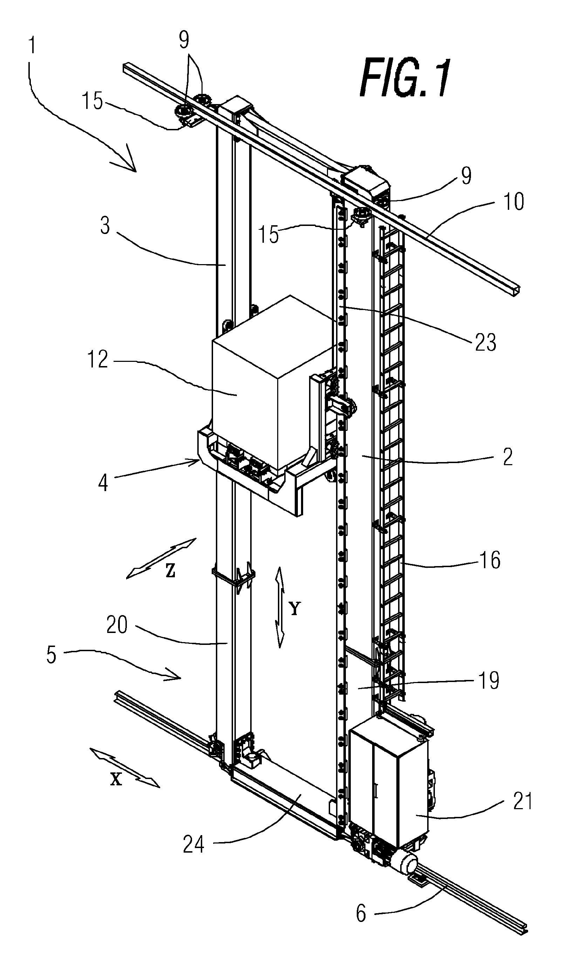

Said guiding operation is carried out on the guiding translation rail 6, having been provided additionally in the upper part two guiding wheels 9 which are guided as well on a guiding rail 10 located in the upper part as shown in figure 1. These upper guiding wheels 9 are located on supports 15 protruding from one of the sides of the corresponding vertical column 2, 3. Another movement to be carried out by the transelevator 1 corresponds to elevation (Y axis) of the elevator 4 supporting an extraction device 11, guided along the vertical columns, the elevation force being transmitted by means of an elevation cable 13 which, after having been guided by an elevation pulley 14, which forms part of the transmission means and it is located in the upper end of the main column 2, winds up or unwinds on an elevation drum 17 which in its turn rotates driven by the elevation driving group 18.

Advantageously, said drum for elevating the cable 17, which winds up the elevation cable 13, protrudes laterally in respect to the main vertical column 2.

In the last place, the movement to be carried out corresponds to the Z axis, by means of the elevator 4 supporting the transported load 12 on the extraction device 11 which has a telescopic mechanism for its extraction from a storage compartment of the shelving unit or its introduction into the same.

The lower driving unit comprises the two lower portions 19, 20 of the corresponding vertical columns 2, 3 which length is always the same independently of the total height of the transelevator 1 for any installation. The upper and lower parts of each vertical column (2, 3) are secured by means of securing elements in the form of screws and similar to be introduced into the orifices 31 of the perimetric protruding element 32, which has rectangular form and is arranged both in the upper area of said two lower portions 19, 20 as well as in the lower area of the upper portion of the columns 2, 3.

The lower portion of the main column 2 comprises the driving mechanisms for translation and elevation of the transelevator 1 as well as the elevation drum 17 and the electrical control cabinet 21, thus constituting the movement means and the driving means. This arrangement has the advantage to permit the standard manufacture independently of the height and type of the assembly of the transelevator 1 for each installation, as well as to facilitate carrying out the electrical load tests for the translation and elevation means at the manufacturing site.

Referring again to the main column 2, it incorporates the previously mentioned elevation pulley 14, two of the upper translation guiding wheels 9, the elevation guide 23 located on the side opposite to the auxiliary column 3 and a metallic ladder 16 secured by means of metallic supports 22 extending to a part of the height of said vertical column 2 and permitting to carry out maintenance jobs.

The auxiliary column 3 incorporates as well in its upper end two of the guiding translation wheels 9.

A crossbar 24 may be appreciated joining the main and auxiliary columns, permitting the transmission of efforts between said vertical columns 2, 3 and forming part of the lower driving unit.

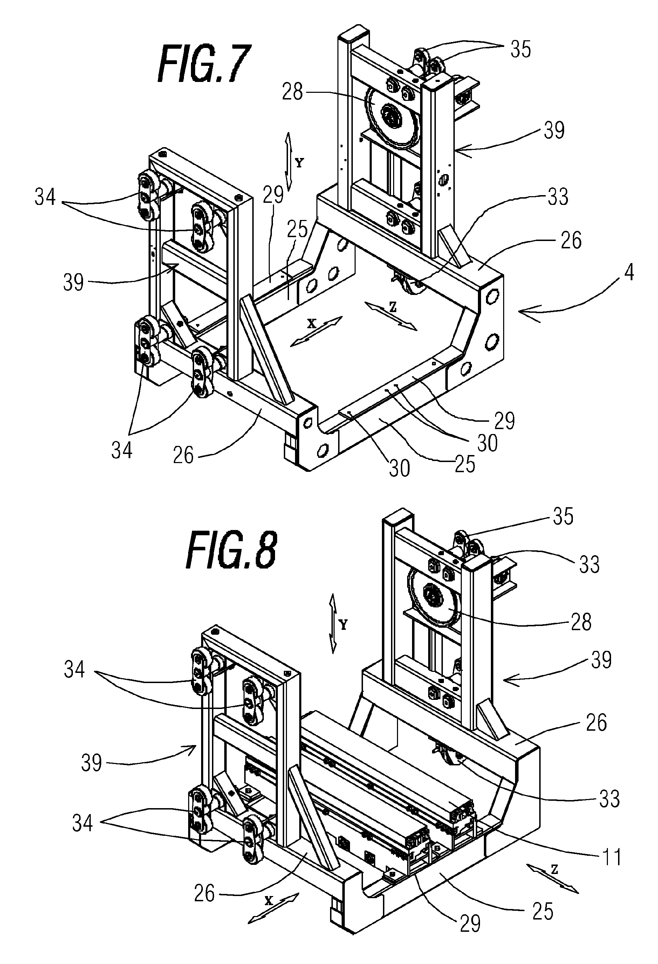

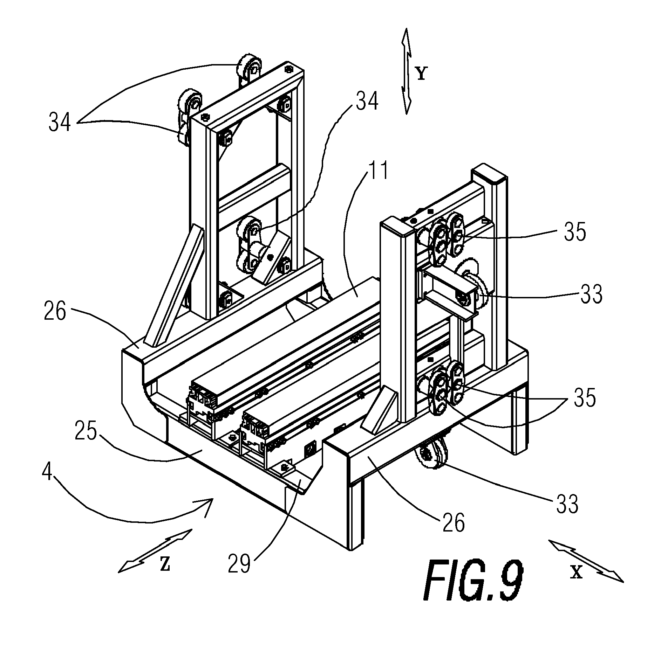

The elevator 4 which may me seen in more detail in figures 7, 8 and 9, which supports the extraction device, comprises two support sections 25 substantially having "U" shape, made out from hollow profiles, being both support sections 25 secured to each other by means of two crossbars 26 (formed by rectangular cross section hollow profiles), elevation guiding wheels 33, 34, 35 and an elevation pulley 28 laterally located which guides the elevation cable 13.

The extraction device 11 shown in figure 8, may be of any type known in the field and it is independent of the structure of the elevator, although it has to permit in all cases the displacement of the load along the Z axis. The central area of each support section portion 25 has in its upper part a flat surface in which the horizontal plate 29 abuts, being this latter provided with a plurality of orifices 30 for securing the extraction device 11.

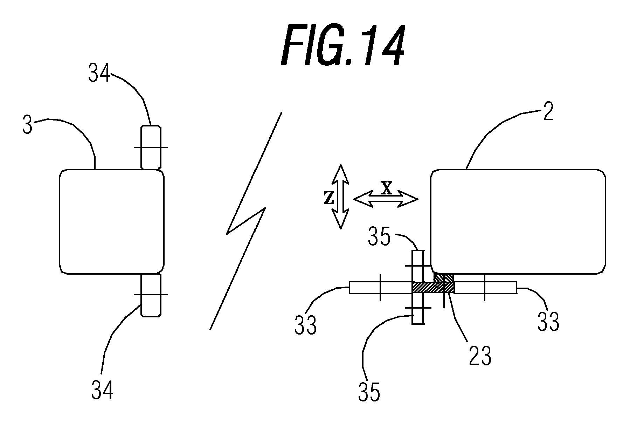

The plurality of guiding wheels 33, 34, 35 are located on metallic supports 39 defined by various interconnected profiles secured on the upper part of the crossbars 26, so that said guiding wheels 33, 34, 35 roll along on the main vertical column 2 along the axes X and Z and roll on the auxiliary vertical column 3 along the Z axis, as shown in figure 14 (said figure shows the rotation axes of the guiding wheels 33, 34, 35, as well as the elevation guide 23 which has been shown in cross-section, some of the elements having been omitted to facilitate the understanding). Thanks to this feature, the efforts along the X axis are not transferred to the auxiliary vertical column 3 avoiding overguidance problems.

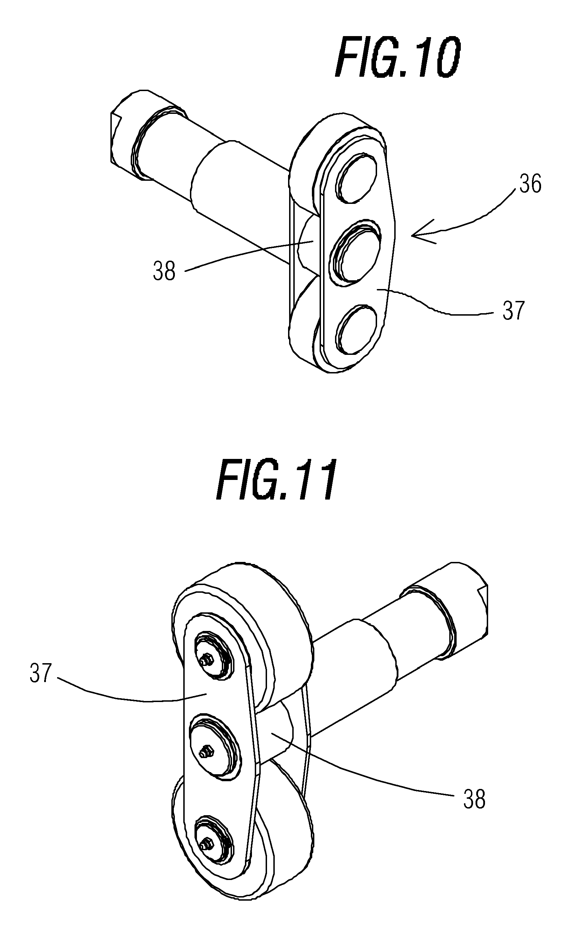

As shown in figures 10 and 11, the wheels 34, 35 are assembled in groups 36 of two wheels mounted on a plate 37 which is articulated to a free rotating shaft 38, so that the contact is ensured at any time on the surface on which they slide. The fact that the guiding wheels along Z axis are articulated forming groups of two wheels permit to absorb larger reaction forces with smaller dimensions, enabling a higher load capacity to the elevator and stronger acceleration and deceleration manoeuvres in the extraction device, which contributes a time saving in the manoeuvres for the extraction or introduction of the load and requires a lower height of the elevator 4.

The details, shape, dimensions and other accessory elements as well as the materials used in the manufacture of the transelevator of the invention could be conveniently substituted by other technically equivalent elements, not departing from the essentiality of the invention nor from the scope of the same as defined by the appended claims.

## Claims

1. Transelevator (1) for transporting loads, comprising two vertical columns (2, 3) capable to move on an horizontal plane, having a substantially rectangular cross-section, between which columns an elevator (4) is capable of vertically moving for the displacement of a load from or towards a storage compartment of a shelving unit; transmission means for driving the elevator (4) and driving means for horizontally moving the transelevator, **characterised in that** the transmission means of the elevator and the driving means for elevation and translation are supported on one of the vertical columns (2), so that the main efforts due to the weight of the elevator (4) and the inertia of the translation are supported by the main vertical column (2), being the cross section of said main vertical column (2) larger than the cross section of the auxiliary vertical column (3).

2. Transelevator (1) according to claim 1, **characterised in that**, groups of translation wheels are provided in the lower portion of each of both vertical columns (2, 3), each of the wheel groups being associated to the vertical column, wherein each of the translation groups of wheels is mechanically bound to said driving means.

3. Transelevator (1) according to claim 1, **characterised in that** guiding means are provided in the upper part of both vertical columns (2, 3) so that the transelevator (1) is movable on an horizontal plane.

4. Transelevator (1) according to claim 1, **characterised in that** a crossbar is secured at the upper area of each of its ends to corresponding vertical columns (2, 3).

5. Transelevator (1) according to claim 1, **characterised in that** each of the columns (2, 3) is formed by a corresponding lower part (19, 20) and an upper section, which may be bound one to the other by means of securing elements.

6. Transelevator (1) according to claim 5, **characterised in that** the securing elements are screwing elements to be introduced in orifices (31) of a perimetric protruding section (32).

7. Transelevator (1) according to claims 1 and 5, **characterised in that** an additional crossbar (24) is secured by each of its ends to the corresponding lower part of the vertical columns (2, 3).

8. Transelevator (1) according to claims 5 and 7, **characterised in that** the lower portions (19, 20) of the respective vertical columns (2, 3) and the additional crossbar (24) form an integral structure.

9. Transelevator (1) according to claims 1 and 8, **characterised in that** the transmission means to drive the elevator (4) comprise an elevation driving group and an elevation drum (17) located in the structure (5) aimed at winding and unwinding the elevation cable (13) forming part of the elevator (4) and an elevation pulley (14), located in the upper part of the vertical column (2), around which the elevation cable (13) is arranged.

10. Transelevator (1) according to claim 2, **characterised in that** the lower ends of the vertical columns (2, 3) have "L" shaped lodgings to incorporate plates (27) to support the translation wheels (7).

11. Transelevator (1) according to claim 1, **characterised in that** the elevation and translation driving means are mounted on the lower portion (19) of the main vertical column (2).

12. Transelevator (1) according to claim 9, **characterised in that** the elevation drum for cable (17) which winds up the elevation cable (13) protrudes laterally in respect to the lower portion (19) of the main vertical column (2).

13. Elevator (4) for the transport of loads, applicable to a transelevator of the double column type, which moves along said vertical columns (2, 3) with the assistance of guiding means, characterised for comprising two support sections (25) substantially in "U" form, bound one to the other by its ends by means of two crossbars (26) including the central area of each support section (25) an horizontal plate (29) fixedly secured, in which the extraction device (11), extendable along the Z axis, may be coupled.

14. Elevator (4) for the transport of loads according to claim 13, **characterised in that** the horizontal plate (29) has a plurality of orifices (30) for the insertion of screws.

15. Elevator (4) for the transport of loads according to claim 13, **characterised in that** the guiding means comprise plurality of guiding wheels (33, 34, 35) located on supports (39) secured to the upper section of crossbars (26) so that said guiding wheels (33, 34, 35) roll on the main vertical column (2) along the axes X and Z and roll on the auxiliary vertical column (3) along the Z axis.

16. Elevator (4) for the transport of loads according to claim 15, **characterised in that** the guiding wheels are arranged in groups of two wheels coupled to a plate articulated to a free rotating shaft.
